# EUROPÄISCHE PATENTSCHRIFT

(11) **EP 1 896 745 B1**
(45) Veröffentlichungstag und Bekanntmachung des Hinweises auf die Patenterteilung: **22.07.2009**
(21) Anmeldenummer: 06724750.2
(22) Anmeldetag: 06.05.2006
(51) Int. Cl.: F16D 41/08, B60N 2/22

(54) **STELLEINRICHTUNG, INSBESONDERE ZUR VERSTELLUNG EINES FAHRZEUGSITZES**
POSITIONING DEVICE, ESPECIALLY FOR ADJUSTING A VEHICLE SEAT
DISPOSITIF DE REGLAGE, NOTAMMENT POUR DEPLACER UN SIEGE DE VEHICULE

(30) Priorität: 18.06.2005 DE 102005028307
(43) Veröffentlichungstag der Anmeldung: 12.03.2008
(73) Patentinhaber: Schaeffler KG, 91074 Herzogenaurach (DE)
(72) Erfinder: HOCHMUTH, Harald, 91469 Hagenbüchach (DE); DIRNBERGER, Thomas, 90587 Obermichelbach (DE)
(86) Internationale Anmeldenummer: PCT/EP2006/004266
(87) Internationale Veröffentlichungsnummer: WO 2006/136234

(56) Entgegenhaltungen:
- WO-A-00/32440
- DE-U1- 9 315 132
- US-A- 5 593 210
- US-B1- 6 273 233

## Beschreibung

### Gebiet der Erfindung

Die vorliegende Erfindung betrifft eine mehrere Klemmkörper aufweisende, in beide Drehrichtungen betätigbare Stelleinrichtung, insbesondere zur Verstellung eines Fahrzeugsitzes.

### Hintergrund der Erfindung

Eine Stelleinrichtung zur Verstellung eines Kraftfahrzeugsitzes ist beispielsweise aus der DE 198 54 931 A1 bekannt. Innerhalb dieser Stelleinrichtung wirkt ein so genanntes Klemmrollenschaltwerk mit einem schaltbaren Klemmrollengesperre zusammen, wobei eine von einem Schwenkhebel durchführbare Schwenkbewegung über das Klemmrollenschaltwerk auf eine Abtriebswelle des schaltbaren Klemmrollengesperres übertragbar ist. Das Klemmrollenschaltwerk und das schaltbaren Klemmrollengesperre weisen eine gemeinsame geometrische Achse auf. Zur Lagerung verschiedener rotierbarer Komponenten der Stelleinrichtung sind mehrere Radiallager vorgesehen. Insgesamt handelt es sich bei der Stelleinrichtung um eine bewährte Konstruktion, die jedoch aufwändig zu fertigen ist.

### Aufgabe der Erfindung

Der Erfindung liegt die Aufgabe zugrunde, eine in zwei Drehrichtungen betätigbare Stelleinrichtung, insbesondere für eine Sitzverstellung in einem Kraftfahrzeug, anzugeben, welche sich durch einen kompakten Aufbau und rationelle Herstellungsmöglichkeiten sowie durch eine besonders hohe Zuverlässigkeit und Langlebigkeit auszeichnet.

### Zusammenfassung der Erfindung

Diese Aufgabe wird erfindungsgemäß gelöst durch eine Stelleinrichtung mit den Merkmalen des Anspruchs 1. Diese Stelleinrichtung weist ein schwenkbares, vorzugsweise manuell betätigbares Antriebselement sowie einen um dieselbe Achse drehbaren, in einem Gehäuse gelagerten, als Abtriebselement fungierenden Außenring auf. An das bevorzugt als Blechteil ausgebildete Antriebselement sind mehrere sich parallel zur Achse des Antriebs- sowie des Abtriebselementes erstreckende Schaltfinger einstückig angeformt. Diese Schaltfinger wirken mit zwei radial innerhalb des Außenrings und koaxial zu diesem angeordneten, gegeneinander verschwenkbaren, mehrflügeligen Klemmscheiben zusammen: Jeweils zwischen einem Flügel der ersten Klemmscheibe und einem Flügel der zweiten Klemmscheibe ist eine Aussparung gebildet, in welche einer der Schaltfinger eingreift, so dass bei Verschwenkung des Antriebselementes wahlweise eine der beiden Klemmscheiben mittels der Schaltfinger mitnehmbar ist. An jedem Flügel der Klemmscheiben ist eine Klemmfläche gebildet, wobei zwischen den Klemmflächen und dem Außenring Klemmrollen geführt sind.

Die Stelleinrichtung weist weiter eine normal zur Achse des Antriebs- sowie des Abtriebselementes angeordnete, nicht rotierbar auf dem Gehäuse befindliche Kappe auf, welche eine der Anzahl der Schaltfinger entsprechende Anzahl an Spreiznocken aufweist, die in den Raum radial innerhalb des Außenrings eingreifen. Jede Spreiznocke bildet sowohl einen Abstandshalter zwischen zwei auf benachbarten Klemmflächen angeordneten Klemmrollen als auch jeweils einen Anschlag für die diese Klemmflächen aufweisenden Flügel der als Antriebsteile fungierenden Klemmscheiben.

Die beiden Klemmscheiben weisen eine übereinstimmende Anzahl an Flügeln auf, wobei sich in Umfangsrichtung stets ein Flügel der ersten Klemmscheibe und ein Flügel der zweiten Klemmscheibe abwechseln. Die Flügel sind derart bemessen, dass sie eine begrenzte Verschwenkung der einen Klemmscheibe relativ zur anderen Klemmscheibe zulassen. Hierbei befinden sich sämtliche Flügel im Wesentlichen in einer gemeinsamen, normal zur Achse der Stelleinrichtung angeordneten Ebene. Durch mindestens eine Rückstellfeder, welche zwischen einem Flügel der ersten Klemmscheibe und einem Flügel der zweiten Klemmscheibe wirkt, sind die Klemmscheiben mit einer Kraft in Richtung einer definierten Anschlagsposition beaufschlagbar. In dieser Anschlags- oder Normalposition ist jeder Schaltfinger des Antriebselementes an beiden Klemmscheiben angeschlagen. Die Rückstellfedern sind in raumsparender Weise bevorzugt als Schraubenfedern ausgebildet.

Um eine Geräuschentwicklung durch die Rückstellfedern bei der Betätigung der Stelleinrichtung zu vermeiden, ist jede einzelne Rückstellfeder derart geführt, dass schabende Geräusche an Komponenten wie dem Außenring vermieden werden. Zu diesem Zweck sind die Rückstellfedern beispielsweise mittels eines Haltevorsprungs, allgemein als Haltekontur bezeichnet, derart an den Flügeln der Klemmscheiben gehalten, dass sie ohne Kontakt mit dem Abtriebselement im Raum radial innerhalb dieses Abtriebselementes komprimierbar bzw. expandierbar sind.

Die Klemmscheiben sind vorzugsweise aus Metall, insbesondere als Sintermetallteile, gefertigt. Die zwischen den auf den Oberflächen der Flügel der Klemmscheiben gebildeten Klemmflächen und der zylindrischen Innenwandung des Außenrings geführten Klemmrollen werden permanent mit einer Kraft in Richtung ihrer Klemmposition beaufschlagt. Zur Bereitstellung dieser Kraft sind vorzugsweise einzelne, insbesondere als Schraubenfedern ausgebildete Freilauffedern vorgesehen, die jeweils zwischen einem Flügel einer Klemmscheibe und der auf diesem Flügel angeordneten Klemmrolle wirken.

Um die die Spreiznocken aufweisende Kappe verdrehsicher auf dem Gehäuse zu halten, weist letztgenanntes bevorzugt mindestens eine Aufnahme auf, in welche eine Verdrehsicherungsnocke der Kappe eingreift. Die Kappe einschließlich sämtlicher Nocken, d.h. der Spreiznocken sowie der Verdrehsicherungsnocken, ist bevorzugt einstückig aus Kunststoff gefertigt.

Nachfolgend wird ein Ausführungsbeispiel anhand einer Zeichnung näher erläutert. Hierin zeigen:

### Kurze Beschreibung der Zeichnung

- Figur 1: in einer perspektivischen, geschnittenen Darstellung eine Stelleinrichtung für einen Fahrzeugsitz,
- Figur 2: eine Kappe der Stelleinrichtung nach Figur 1 und
- Figur 3: ein Antriebselement der Stelleinrichtung nach Figur 1.

### Ausführliche Beschreibung der Zeichnung

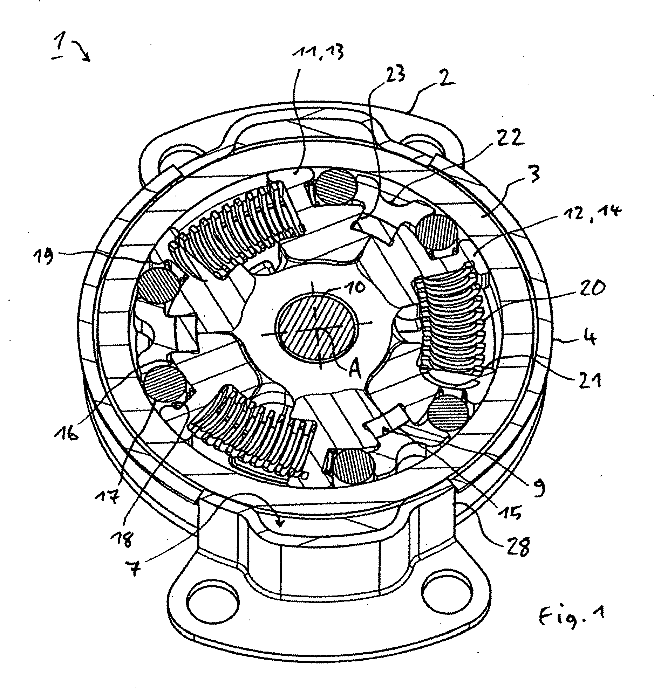

In Figur 1 ist eine Stelleinrichtung 1 gezeigt, die ein Teil einer Sitzverstellung eines Kraftfahrzeugsitzes bildet. Die Funktion der Stelleinrichtung 1 entspricht grundsätzlich der Funktion des Klemmrollenschaltwerks nach der DE 198 54 931 A1. Mit der Stelleinrichtung 1 nach Figur 1 wirkt eine weitere, nicht dargestellte Vorrichtung mit Freilaufeigenschaft zusammen, deren Funktion dem schaltbaren Klemmrollengesperre nach der DE 198 54 931 A1 entspricht.

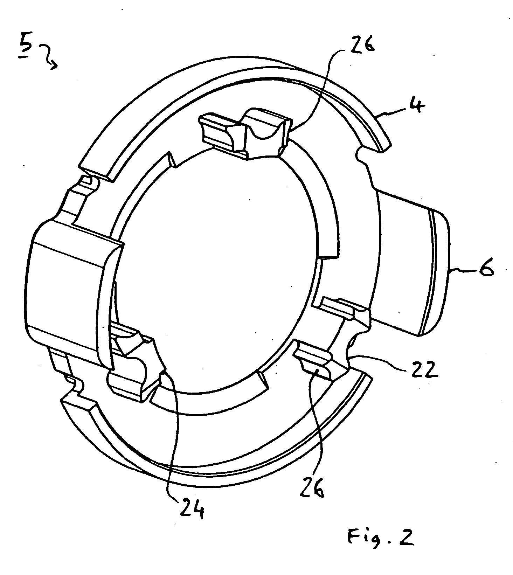

Die Stelleinrichtung 1 weist ein Gehäuse 2 aus Metallblech auf, in welchem ein ebenfalls aus Metall gefertigter Außenring 3 als Abtriebselement drehbar gelagert ist. Der Außenring 3 ist von Abschnitten einer Ringwandung 4 umgeben, die Teile einer in Figur 2 vollständig dargestellten Kappe 5 aus Kunststoff sind. Die Kappe 5 ist verdrehsicher auf dem Gehäuse 2 gehalten, wobei zwei Verdrehsicherungsnocken 6 der Kappe 5 in korrespondierende Aufnahmen 7 des spanlos geformten Gehäuses 2 eingreifen. Zusätzlich zur Abdeckfunktion weist die Kappe 5 noch weitere, untenstehend näher erläuterte Funktionen auf.

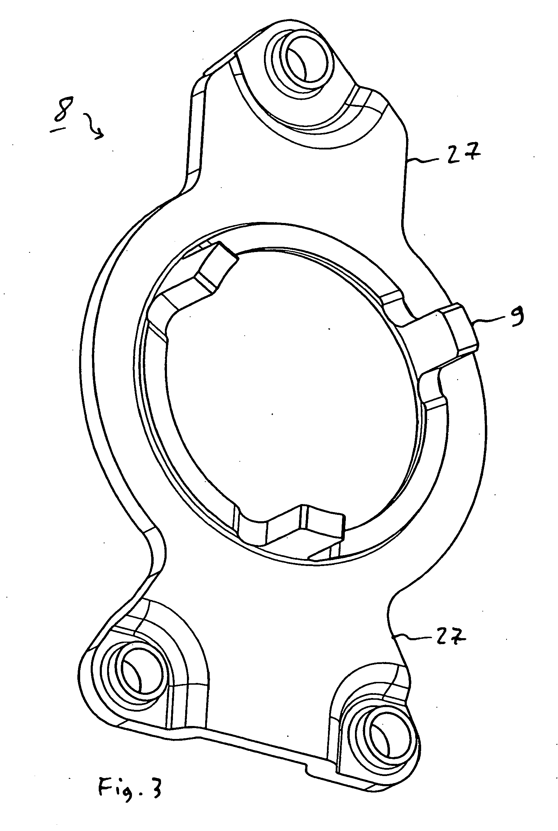

Als Antriebselement 8 der Stelleinrichtung 1 ist eine in Figur 3 im Detail dargestellte Schaltscheibe vorgesehen. Die Schaltscheibe 8 ist als Stanzbiegeteil wie das Gehäuse 2 aus Blech gefertigt und weist drei einstückig angeformte Schaltfinger 9 auf, die auch in Figur 1 sichtbar sind und sich parallel zur Achse A des Antriebselementes 8 sowie des Abtriebselementes 3 erstrecken. In nicht dargestellter Weise ist an der als Antriebselement fungierenden Schaltscheibe 8 ein Hebel zur manuellen Betätigung der Stelleinrichtung 1 befestigt.

Zentral innerhalb der Stelleinrichtung 1 befindet sich ein Bolzen 10, dessen Symmetrieachse die Drehachse A des Antriebselementes 8 sowie des Abtriebselementes 3 definiert. Um den Bolzen 10 sind koaxial zum Außenring 3 und radial innerhalb von diesem zwei jeweils dreiflügelige Klemmscheiben 11, 12 drehbar. Hierbei befinden sich die insgesamt sechs Flügel 13, 14 der Klemmscheiben 11, 12 im Wesentlichen in einer gemeinsamen, normal zur Achse A angeordneten Ebene, wobei sich in Umfangsrichtung stets ein Flügel 13 der ersten Klemmscheibe 11 und ein Flügel 14 der zweiten Klemmscheibe 12 abwechseln. Zwischen benachbarten Flügeln 13, 14 sind insgesamt drei Aussparungen 15 gebildet, in welche die Schaltfinger 9 des Antriebselementes 8 eingreifen. Bei einer Verschwenkung des Antriebselementes 8 aus der dargestellten Neutralstellung heraus wird somit eine der Klemmscheiben 11, 12 in die entsprechende Drehrichtung mitgenommen.

Die Klemmscheiben 11, 12 sind zwischen das Antriebselement 8 und den Außenring 3 geschaltete Antriebsteile, die die Übertragung einer Drehbewegung in wählbarer Richtung ermöglichen. Zur Herstellung des Kraftflusses zwischen einer Klemmscheibe 11, 12 und dem Außenring 3 weist jeder Flügel 13, 14 eine Klemmfläche 16 auf, auf der eine an der Innenseite des Außenrings 3 anliegende Klemmrolle 17 geführt ist. Mittels einer Freilauffeder 18, die als Schraubenfeder ausgebildet und zwischen einem sich bis zum Außenring 3 etwa in radialer Richtung erstreckenden Arm 19 des Flügels 13, 14 und der Klemmrolle 17 eingespannt ist, wird jede Klemmrolle 17 mit einer Kraft in Richtung zur Klemmposition beaufschlagt. Die Klemmflächen 16 sind derart ausgebildet, dass bei feststehendem Außenring 3 die Flügel 13, 14 in Richtung zur dargestellten Neutralposition schwenkbar, nicht jedoch aus dieser Position heraus bewegbar sind.

Um die Klemmscheiben 11, 12 permanent mit einer Kraft in Richtung zur dargestellten Neutralposition zu beaufschlagen, sind zwischen die den Aussparungen 15 abgewandten Seiten der Flügel 13 ,14 insgesamt drei Rückstellfedern 20 in Form von Schraubenfedern eingespannt, wobei die von den Rückstellfedem 20 auf die Klemmscheiben 11, 12 ausgeübte Kraft die von den Freilauffedern 18 ausgeübte Kraft weit übersteigt. Die als Druckfedern ausgebildeten Rückstellfedern 20 werden komprimiert, wenn eine der Klemmscheiben 11, 12 durch Verschwenkung der Schaltscheibe 8 aus der Normalposition heraus gedreht wird. Am Arm 19 jedes Flügels 13, 14 befindet sich im an den Außenring 3 grenzenden Bereich eine Haltekante 21 als Haltekontur für die Rückstellfeder 20, die sicherstellt, dass die Rückstellfeder 20 während der gesamten möglichen Schwenkbewegung der Klemmscheibe 11, 12 nicht mit dem Außenring 3 in Kontakt kommt. Auf diese Weise werden Geräusche durch etwaige schabende Bewegungen vermieden.

Wird eine der Klemmscheiben 11, 12 verschwenkt, so soll die andere Klemmscheibe 12, 11 hierbei in konstanter Winkelposition gehalten werden. Um dies zu erreichen, weist die Kappe 5 drei Spreiznocken 22 auf, welche, in Neutralposition an die Schaltfinger 9 angrenzend, teilweise in die Aussparungen 15 eingreifen. Die in Umfangsrichtung gemessene Breite desjenigen Bereichs einer Spreiznocke 22, der in die Aussparung 15 eingreift, entspricht der Breite des Schaltfingers 9. Solange sich die Stelleinrichtung 1 in Normalposition befindet, liegen Absätze 23 der Flügel 13, 14 sowohl am Schaltfinger 9 als auch an Anschlägen 24 der Spreiznocke 22 an. Die Absätze 23 bilden dabei sich etwa in radialer Richtung erstreckende Begrenzungen der Aussparung 15.

Wird nun der Schaltfinger 9 und damit eine der Klemmscheiben 11, 12 aus der Normal- oder Neutralposition heraus verschwenkt, so bleibt der Absatz 23 der anderen Klemmscheibe 12, 11 in unveränderter Anlage am Anschlag 24. Bei derjenigen Klemmscheibe 11, 12, die aus der Neutralposition heraus verschwenkt wird, befindet sich die Klemmrolle 17 in Klemmposition, so dass der Außenring 3 mit dieser Klemmscheibe 11, 12 mitgedreht wird. Gleichzeitig muss verhindert werden, dass ein Kraftschluss zwischen der anderen Klemmscheibe 12, 11 und dem Außenring 3 gebildet wird. Zu diesem Zweck weist jede Spreiznocke 22 im radial äußeren, an den Außenring 3 grenzenden Bereich, einen Abstandshalter 25 mit zwei einander in Umfangsrichtung abgewandten Anlageflächen 26 für jeweils eine Klemmrolle 17 auf. Die Anlagefläche 26 an der Oberfläche der Spreiznocke 22 stellt sicher, dass die an der Anlagefläche 26 anliegende Klemmrolle 17 soweit aus der Klemmposition verdrängt ist, dass bei einer Verdrehung des Außenrings 3, die die Klemmrolle 17 tendenziell zur Spreiznocke 22 hin drückt, kein Kraftfluss zwischen dem Außenring 3 und der Klemmfläche 16, auf welcher sich die Klemmrolle 17 befindet, aufgebaut wird.

Um eine nahezu spielfreie Betätigung der Stelleinrichtung 1 ohne Umschaltverluste zu ermöglichen, sind in Neutralstellung der Schaltscheibe 8 die beidseitig des Abstandshalters 25 auf verschiedenen Flügeln 13, 14 angeordneten Klemmrollen 17 nahezu in Klemmposition. Bereits bei einer geringfügigen Verschwenkung einer der Klemmscheiben 11, 12 wird somit die Klemmposition erreicht, die ein Mitdrehen des Abtriebselementes 3 mit dem Antriebselement 8 bewirkt. Eine Verschwenkung der Klemmscheibe 11, 12 ist soweit möglich, bis einer der sich radial nach außen erstreckenden Längsabschnitte 27 der Schaltscheibe 8 an einer Gehäusekante 28 des Gehäuses 2 anliegt, wobei in diesem Zustand die Rückstellfedern 20 annähernd auf Block sind. Ein Zurückschwenken des Antriebselementes 8 in die Normalposition ist aus jeder Winkelposition heraus möglich, so dass die Stelleinrichtung 1 eine stufenlose Verstellung des Kraftfahrzeugsitzes ermöglicht.

Zusammenfassend umfasst die Stelleinrichtung 1 ein schwenkbares, insbesondere manuell betätigbares, Antriebselement 8 sowie ein um dieselbe Achse A drehbares, in einem Gehäuse 2 gelagertes Abtriebselement 3 in Form eines Außenrings, wobei sich mehrere einstückig an das Antriebselement 8 angeformte Schaltfinger 9 parallel zur Achse A erstrecken, weiter zwei radial innerhalb des Außenrings 3 angeordnete, jeweils mehrere zur Führung von Klemmrollen 17 vorgesehene Klemmflächen 16 aufweisende, gegeneinander um die Achse A verschwenkbare, mehrflügelige Klemmscheiben 11, 12, zwischen welchen Aussparungen 15 gebildet sind, in die jeweils einer der Schaltfinger 9 eingreift, sowie eine auf dem Gehäuse 2 gehaltene Kappe 5, welche mehrere Spreiznocken 22 aufweist, wobei jede Spreiznocke 22 sowohl einen Abstandshalter 25 zwischen zwei auf benachbarten Klemmflächen 16 angeordneten Klemmrollen 17 als auch jeweils einen Anschlag 24 für die Klemmscheiben 11, 12 bildet. Hierbei ist die Vielzahl der durch die Kappe 5 realisierten Funktionen von besonderem Vorteil. Weiterhin ist von Vorteil, dass die Schaltscheibe 8 keinerlei Durchstanzungen oder sonstige Öffnungen aufweist und damit besonders stabil ist. Ebenso weist die im Spritzgussverfahren aus Kunststoff gefertigte Kappe 5 keine Öffnungen auf. Insgesamt ist der Verstellmechanismus der Stelleinrichtung 1 vollständig gekapselt.

### Bezugszeichenliste

- 1: Stelleinrichtung
- 2: Gehäuse
- 3: Abtriebselement, Außenring
- 4: Ringwandung
- 5: Kappe
- 6: Verdrehsicherungsnocke
- 7: Aufnahme
- 8: Antriebselement, Schaltscheibe
- 9: Schaltfinger
- 10: Bolzen
- 11: Klemmscheibe
- 12: Klemmscheibe
- 13: Flügel
- 14: Flügel
- 15: Aussparung
- 16: Klemmfläche
- 17: Klemmrolle
- 18: Freilauffeder
- 19: Arm
- 20: Rückstellfeder
- 21: Haltekontur
- 22: Spreiznocke
- 23: Absatz
- 24: Anschlag
- 25: Abstandshalter
- 26: Anlagefläche
- 27: Längsabschnitt
- 28: Gehäusekante

- A: Achse

## Patentansprüche

1. Stelleinrichtung (1), insbesondere zur Verstellung eines Fahrzeugsitzes, mit
- einem Gehäuse (2), in welchem ein Außenring (3) als Abtriebselement drehbar gelagert ist,
- einem koaxial zum Außenring (3) angeordneten, schwenkbaren Antriebselement (8), an welches mehrere sich parallel zur Achse (A) des Antriebselementes (8) sowie des Abtriebselementes (3) erstreckende Schaltfinger (9) einstückig angeformt sind,
- zwei radial innerhalb des Außenrings (3) und koaxial zu diesem angeordnete, gegeneinander verschwenkbare, mehrflügelige Klemmscheiben (11,12), wobei jeweils zwischen einem Flügel (13) der ersten Klemmscheibe (11) und einem Flügel (14) der zweiten Klemmscheibe (12) eine Aussparung (15), in welche einer der Schaltfinger (9) eingreift, gebildet ist, und wobei jeder Flügel (13,14) eine Klemmfläche (16) aufweist,
- mehreren zwischen den Klemmflächen (16) und dem Außenring (3) geführten Klemmrollen (17),
- einer normal zur Achse (A) angeordneten, nicht rotierbar auf dem Gehäuse (2) gehaltenen Kappe (5), welche eine der Anzahl der Schaltfinger (9) entsprechende Anzahl an Spreiznocken (22) aufweist, wobei jede Spreiznocke (22) sowohl einen Abstandshalter (25) zwischen zwei auf benachbarten Klemmflächen (16) angeordneten Klemmrollen (17) als auch jeweils einen Anschlag (24) für die diese Klemmflächen (16) aufweisenden Flügel (13,14) der Klemmscheiben (11,12) bildet.

2. Stelleinrichtung nach Anspruch 1, **gekennzeichnet durch** eine zwischen jeweils einem Flügel (13,14) bei der Klemmscheiben eingespannte Rückstellfeder (20).

3. Stelleinrichtung nach Anspruch 2, **dadurch gekennzeichnet, dass** die Rückstellfeder (20) als Schraubenfeder ausgebildet ist.

4. Stelleinrichtung nach Anspruch 2 oder 3, **dadurch gekennzeichnet, dass** die Rückstellfeder (20) mittels jeweils einer Haltekontur (21), insbesondere eines Haltevorsprungs, derart an den Flügeln (13,14) der Klemmscheiben (11,12) gehalten ist, dass sie ohne Kontakt mit dem Abtriebselement (3) radial innerhalb des Abtriebselementes (3) geführt ist.

5. Stelleinrichtung nach einem der Ansprüche 1 bis 4, **dadurch gekennzeichnet, dass** die Klemmscheiben (11,12) als Sintermetallteile gefertigt sind.

6. Stelleinrichtung nach einem der Ansprüche 1 bis 5, **dadurch gekennzeichnet, dass** jede Klemmrolle (17) durch eine separate Freilauffeder (18), welche sich an einem Flügel abstützt (13,14), angefedert ist.

7. Stelleinrichtung nach einem der Ansprüche 1 bis 6, **dadurch gekennzeichnet, dass** das Gehäuse (2) mindestens eine Aufnahme (7) für eine Verdrehsicherungsnocke (6) der Kappe (5) aufweist.

8. Stelleinrichtung nach einem der Ansprüche 1 bis 7, **dadurch gekennzeichnet, dass** die Kappe (5) einstückig aus Kunststoff gefertigt ist.

## Claims

1. Positioning device (1), especially for adjusting a vehicle seat, with
- a housing (2) in which an outer ring (3) is mounted rotatably in the form of a driven element,
- a pivotable driving element (8) which is arranged coaxially with respect to the outer ring (3) and on which a plurality of switching fingers (9) extending parallel to the axis (A) of the driving element (8) and of the driven element (3) are integrally formed,
- two multi-winged clamping discs (11, 12) which are arranged radially within the outer ring (3) and coaxially with respect thereto and can be pivoted in relation to each other, wherein a cutout (15) in which one of the switching fingers (9) engages is formed in each case between a wing (13) of the first clamping disc (11) and a wing (14) of the second clamping disc (12), and wherein each wing (13, 14) has a clamping surface (16),
- a plurality of clamping rollers (17) guided between the clamping surfaces (16) and the outer ring (3), and
- a cap (5) which is arranged normally to the axis (A), is held non-rotatably on the housing (2) and has a number of expanding cams (22) corresponding to the number of switching fingers (9), wherein each expanding cam (22) forms both a spacer (25) between two clamping rollers (17) arranged on adjacent clamping surfaces (16) and a respective stop (24) for the wings (13, 14) of the clamping discs (11, 12), which wings have said clamping surfaces (16).

2. Positioning device according to Claim 1, **characterized by** a resetting spring (20) which is clamped in the clamping discs between respective wings (13, 14).

3. Positioning device according to Claim 2, **characterized in that** the resetting spring (20) is designed as a helical spring.

4. Positioning device according to Claim 2 or 3, **characterized in that** the resetting spring (20) is held by means of a respective holding contour (21), in particular a holding projection, on the wings (13, 14) of the clamping discs (11, 12) in such a manner that it is guided radially within the driven element (3) without contact with the driven element (3).

5. Positioning device according to one of Claims 1 to 4, **characterized in that** the clamping discs (11, 12) are produced as sintered metal parts.

6. Positioning device according to one of Claims 1 to 5, **characterized in that** each clamping roller (17) is spring-mounted by means of a separate free-running spring (18) which is supported on a wing (13, 14).

7. Positioning device according to one of Claims 1 to 6, **characterized in that** the housing (2) has at least one receptacle (7) for a twist-preventing cam (6) of the cap (5).

8. Positioning device according to one of Claims 1 to 7, **characterized in that** the cap (5) is produced as a single piece from plastic.

## Revendications

1. Dispositif de réglage (1), notamment pour déplacer un siège de véhicule, avec
- un boîtier (2), dans lequel une bague extérieure (3) servant d'élément de sortie est montée de façon rotative,
- un élément d'entraînement pivotant (8), disposé coaxialement à la bague extérieure (3), sur lequel sont formés d'une seule pièce plusieurs doigts de commutation (9) s'étendant parallèlement à l'axe (A) de l'élément d'entraînement (8) et de l'élément de sortie (3),
- deux disques de serrage (11, 12) à plusieurs ailes, pouvant pivoter l'un par rapport à l'autre, disposés radialement à l'intérieur de la bague extérieure (3) et coaxialement à celle-ci, dans lequel un évidement (15), dans lequel s'engage un des doigts de commutation (9), est chaque fois formé entre une aile (13) du premier disque de serrage (11) et une aile (14) du second disque de serrage (12), et dans lequel chaque aile (13, 14) présente une surface de serrage (16),
- plusieurs galets de serrage (17) guidés entre les surfaces de serrage (16) et la bague extérieure (3),
- un couvercle (5) disposé normalement à l'axe (A) et maintenu sans rotation sur le boîtier (2), qui présente un nombre de cames d'expansion (22) correspondant au nombre de doigts de commutation (9), dans lequel chaque came d'expansion (22) forme aussi bien une pièce d'écartement (25) entre deux galets de serrage (17) disposés sur des surfaces de serrage voisines (16) qu'une butée respective (24) pour les ailes (13, 14) des disques de serrage (11, 12) qui présentent ces surfaces de serrage (16).

2. Dispositif de réglage selon la revendication 1, **caractérisé par** un ressort de rappel (20) tendu entre une aile respective (13, 14) des deux disques de serrage.

3. Dispositif de réglage selon la revendication 2, **caractérisé en ce que** le ressort de rappel (20) est un ressort hélicoïdal.

4. Dispositif de réglage selon la revendication 2 ou 3, **caractérisé en ce que** le ressort de rappel (20) est maintenu chaque fois au moyen d'un contour de retenue (21), en particulier d'une saillie de retenue, sur les ailes (13, 14) des disques de serrage (11, 12) de telle manière qu'il soit guidé radialement à l'intérieur de l'élément de sortie (3) sans contact avec l'élément de sortie (3).

5. Dispositif de réglage selon l'une quelconque des revendications 1 à 4, **caractérisé en ce que** les disques de serrage (11, 12) sont fabriqués sous la forme de pièces métalliques frittées.

6. Dispositif de réglage selon l'une quelconque des revendications 1 à 5, **caractérisé en ce que** chaque galet de serrage (17) est supporté par un ressort de roue libre séparé (18), qui prend appui sur une aile (13, 14).

7. Dispositif de réglage selon l'une quelconque des revendications 1 à 6, **caractérisé en ce que** le boîtier (2) présente au moins un logement (7) pour une came de blocage anti-rotation (6) du couvercle (5).

8. Dispositif de réglage selon l'une quelconque des revendications 1 à 7, **caractérisé en ce que** le couvercle (5) est fabriqué d'une seule pièce en matière plastique.
